# EUROPÄISCHE PATENTANMELDUNG

(11) **EP 1 531 507 A1**
(43) Veröffentlichungstag der Anmeldung: **18.05.2005**
(21) Anmeldenummer: 04024605.0
(22) Anmeldetag: 15.10.2004
(51) Int. Cl.: H01M 8/02, H01M 4/88, H01M 4/96, H01M 4/86, C01B 31/02

(54) **Verfahren zur Behandlung poröser, Kohle umfassender Substrate, insbesondere für Brennstoffzellen.**

(30) Priorität: 10.11.2003 DE 10352359
(71) Anmelder: FORSCHUNGSZENTRUM JÜLICH GMBH, 52425 Jülich (DE)
(72) Erfinder: Schlumbohm, Carola, 52074 Aachen (DE)

(57) **Zusammenfassung**

Die Erfindung betrifft ein Verfahren zur Behandlung poröser, Kohle umfassender Substrate, bei dem das Substrat mit einer alkalischen Lösung behandelt wird. Diese Behandlung bewirkt insbesondere bei Substraten, die für einen Einsatz in einer Brennstoffzelle vorgesehen sind, eine deutlich verbesserte Langzeitstabilität als ohne Behandlung.

Insbesondere bei Substraten in Form von Gasdiffusionsschichten oder kompletten Elektroden für eine Brennstoffzelle zeigt sich diese verbesserte Langzeitstabilität beim Vergleich mit unbehandelten Gasdiffusionsschichten oder kompletten Elektroden nicht nur in einer punktuell verbesserten Leistung. Diese durch das erfindungsgemäße Verfahren erzielte, verbesserte Leistung kann vorteilhaft auch über längere Zeit aufrechterhalten werden.

## Beschreibung

Die Erfindung betrifft ein Verfahren zur Behandlung poröser, Kohle umfassender Substrate, insbesondere zur Behandlung von Elektroden für Brennstoffzellen.

### Stand der Technik

Brennstoffzellen weisen in der Regel zwei Elektroden, eine Anode und eine Kathode, sowie einen zwischen den Elektroden angeordneten Elektrolyten auf. Je nach Anwendungsbereich sind verschiedene Variationen von Brennstoffzellen möglich.
Polymerelektrolytmembran-Brennstoffzellen (PEM-FC) sind die zur Zeit am weitesten entwickelten Brennstoffzellen. Sie weisen eine kompakte Bauweise auf und erzielen ein gutes Energie/Gewichtsverhältnis. Die Polymerelektrolytmembran-Brennstoffzelle arbeitet bei moderaten Temperaturen um 80 °C. Der Wirkungsgrad beträgt annähernd 50 Prozent.

In der Regel setzen sich die Elektroden aus einem Gewebe, einem Vlies oder auch aus Papier, einer darauf aufgebrachten Zwischenschicht, sowie einer weiteren, den Katalysator aufweisenden Schicht, kurz Katalysatorschicht genannt, zusammen. Die Zwischenschicht besteht meist aus Kohle und einem hydrophobisierendem Zusatz, insbesondere aus Teflon™. Die in der Katalysatorschicht verwendeten Katalysatoren sind in der Regel auf Kohle geträgert und werden meist mit einem Ionomer, beispielsweise Nafion™ und Lösungsmittel dispergiert.

Der hydrophobisierende Zusatz übernimmt gleichzeitig die Funktion der mechanischen Verbindung zwischen dem Substrat und der Zwischenschicht, während der Kohle die Funktion der mechanischen Verbindung zwischen der Katalysatorschicht und der Zwischenschicht zufällt.
Ein in der Literatur beschriebenes Herstellungsverfahren für eine PEM-Brennstoffzelle setzt beispielsweise eine fluorhaltige Folie ein, die zunächst mit einem katalytischen Edelmetall bedampft und anschließend mit einer gasdurchlässigen Elektrode aus Graphitpapier beschichtet wird. Dieser Verbund wird von zwei Bipolarplatten aus Metall oder Graphit eingefasst. In die Bipolarplatten eingefräste oder eingepresste Rillen oder Kanäle ermöglichen die Zufuhr von Brennstoff, insbesondere Wasserstoff und Oxidationsmittel, insbesondere Sauerstoff bzw. Luft zu Anode und Kathode. Neben einer punktuellen hohen Leistung wird der Wirkungsgrad einer Brennstoffzelle insbesondere auch durch die Langzeitstabilität geprägt.

### Aufgabe und Lösung

Die Aufgabe der Erfindung ist es, Bauteile für eine PEM-Brennstoffzelle, insbesondere Gasdiffusionsschichten, Katalysatorschichten und/oder auch komplette Elektroden zur Verfügung zu stellen, die gegenüber den aus dem bisherigen Stand der Technik bekannten, eine deutliche Verbesserung der Langzeitstabilität und der Effektivität aufweisen.

Die Aufgabe der Erfindung wird gelöst durch ein Verfahren zur Behandlung von porösen, Kohle aufweisenden Substraten mit der Gesamtheit an Merkmalen gemäß Hauptanspruch. Die Aufgabe wird ferner gelöst durch ein Verfahren zur Herstellung von Gasdiffusionsschichten und/oder Katalysatorschichten gemäß Nebenanspruch, welches das Behandlungsverfahren gemäß Hauptanspruch aufweist, sowie durch dieses Herstellungs- oder Behandlungsverfahren herstellbare Erzeugnisse in Form von Gasdiffusionsschichten, Katalysatorschichten bzw. kompletten Elektroden gemäß weiterem Nebenanspruch.

Vorteilhafte Ausführungen des Verfahrens finden sich in den darauf rückbezogenen Ansprüchen.

### Gegenstand der Erfindung

Die Erfindung betrifft ein Verfahren zur Nachbehandlung poröser, Kohle umfassender Substrate. Solche Substrate sind beispielsweise Kohle geträgerte Katalysatoren oder auch Gasdiffusionsschichten oder Elektroden von Brennstoffzellen.

Bei dem erfindungsgemäßen Verfahren werden die porösen, Kohle umfassenden Substrate mit einer alkalischen Lösung behandelt. Unter einer alkalischen Lösung sind insbesondere wässrige oder organische alkalische Lösungen zu verstehen. Dazu zählen beispielsweise wässrige NaOH-Lösungen, wässrige KOH-Lösungen, wässrige Ca(OH)₂-Lösungen oder auch wässrige NH₄OH-Lösungen. Die Konzentration der alkalischen Lösung sollte zwischen 0,001 und 10 mol/l, insbesondere zwischen 0,1 und 1 mol/l gewählt werden.

Die Behandlung erfolgt insbesondere durch Eintauchen des Substrates in die alkalische Lösung oder auch durch Aufsprühen der alkalischen Lösung auf das Substrat. Durch die meist hydrophoben Eigenschaften des Kohle umfassenden Substrats kann es zu Benetzungsschwierigkeiten kommen. So hat es sich herausgestellt, dass eine dünne Gasdiffusionsschicht lediglich auf einer alkalischen Lösung schwimmt und nicht eintaucht. In einem solchen Fall kann beispielsweise entweder durch eine geeignete Haltevorrichtung oder durch eine geeignete Verfahrensweise eine gute Benetzung des Substrates sichergestellt werden.

Die Dauer der Nachbehandlung sollte für einen Zeitraum von 5 Minuten bis 5 Stunden, insbesondere von 30 bis 60 Minuten durchgeführt werden. Je höher die Konzentration der alkalischen Lösung, desto kürzer kann in der Regel die Benetzungszeit (Nachbehandlungszeit) gewählt werden. Zudem spielt auch die Art der Nachbehandlung (Sprühen, Nebeln, Aufschwimmen, Eintauchen, etc.) eine Rolle. Beim Eintauchen oder Aufschwimmen kann darüber hinaus auch die Rührgeschwindigkeit Einfluss auf die Nachbehandlung nehmen. Insbesondere die Dicke des zu behandelnden Substrates sowie dessen Porosität haben ebenfalls eine entscheidenden Einfluss auf die Behandlungsdauer.

Ferner hat sich herausgestellt, dass die Temperatur der alkalischen Lösung die benötigte Behandlungszeit beeinflusst. Schon leicht erhöhte Temperaturen führen bei kürzeren Nachbehandlungszeiten zu verbesserten Ergebnissen. Deutlichere Effekte erzielt man regelmäßig mit heißen alkalischen Lösungen im Temperaturbereich zwischen 80 und 100 °C. Im Fall von wässrigen alkalischen Lösungen, kann sogar eine siedende Lösung verwendet werden.

Das erfindungsgemäße Verfahren bietet sich für alle Substrate an, die poröse sind und Kohle aufweisen. Solche Substrate sind insbesondere Gasdiffusionsschichten für Brennstoffzellen sowie Katalysatorschichten. Als besonders vorteilhaft hat sich die Behandlung bei Gasdiffusionsschichten mit einer darauf angeordneten Katalysatorschicht herausgestellt.

Die Behandlung mit einer alkalischen Lösung bewirkt vorteilhaft eine Modifikation der Oberflächengruppen der Kohle, was anhand von einigen Röntgen-Photoelektronen-Spektroskopien (XPS) bestätigt werden konnte. Dies hat einen verbesserten Gas- und Stofftransport zur Folge. Die dabei erzielten Effekte sind darüber hinaus langzeitstabil, so dass dadurch insgesamt die Effektivität von beispielsweise Brennstoffzellen deutlich verbessert wird.

Optional kann nach der Behandlung mit der alkalischen Lösung ein Waschgang nachgeschaltet werden. Dazu ist vorteilhaft Wasser als Waschflüssigkeit besonders geeignet. Der Waschvorgang kann für einen Zeitraum im Bereich von 5 Minuten bis 1 Stunde, insbesondere im Bereich von 20 bis 40 Minuten durchgeführt werden. Die zu wählende Zeit ist ebenfalls von der Art des Waschvorgangs (Tauchen, Sprühen etc.), der Konzentration der zuvor eingesetzten alkalischen Lösung sowie der Dicke und Porosität des Substrates abhängig, und kann von einem Fachmann leicht an Vorgaben angepasst und optimiert werden.

Eine Verbesserung der erzielten Effekte konnte auch mit einer temperierten Waschflüssigkeit erzielt werden. Besonders Wasser mit einer Temperatur im Bereich von 60 bis 80 °C führte zu sehr guten Ergebnissen.

Für eine kommerzielle Anwendung des Verfahrens ist insbesondere eine Vorrichtung denkbar, bei der die zu behandelnden Substrate auf einem Laufband kontinuierlich zunächst durch das alkalische Tauchbad und anschließend durch eine Waschflüssigkeit geleitet werden.

### Spezieller Beschreibungsteil

Nachfolgend wird der Gegenstand der Erfindung anhand von Ausführungsbeispielen und Zahlenwerten näher erläutert, ohne dass der Gegenstand der Erfindung dadurch beschränkt werden soll. Im nachfolgend ausgeführten Ausführungsbeispiel wurden als poröse, Kohle aufweisende Substrate Gasdiffusionsschichten (GDL) verwendet. Sie weisen einen typischen Aufbau aus einem Trägersubstrat und einer Kohleschicht, der sogenannten Microlayer auf. Es ist zu erwarten, dass sich auch anders aufgebaute Gasdiffusionsschichten mit einer auf einem Trägersubstrat aufgebrachten Microlayer für die erfindungsgemäße Behandlung eignen.

Für die Nachbehandlung werden die Gasdiffusionsschichten in 1 M H₂SO₄ bzw. in 1 M NaOH gegeben, die jeweils 80°C aufweisen, und mit Hilfe eines Magnetrührers leicht gerührt. Da sowohl das Substrat als auch die Microlayer hydrophobisiert sind, kann das Material nicht durch das Rühren in die Lauge oder Säure gezogen werden, sondern schwimmt regelmäßig mit einer Seite auf der Flüssigkeitsoberfläche. Da insbesondere die Microlayer beeinflusst werden sollen, wird diese Seite der Flüssigkeit zugewandt. Nach ca. einer Stunde werden die Gasdiffusionsschichten aus der alkalischen bzw. der sauren Lösung genommen und mit 80°C heißem, destilliertem Wasser gewaschen, um eventuelle Reste von der vorherigen Säure- bzw. Basenbehandlung zu entfernen.

Zur Überprüfung werden die unterschiedlich nachbehandelten Gasdiffusionsschichten jeweils in eine Brennstoffzelle eingebaut und unter identischen Bedingungen getestet. Ferner werden XPS-Messungen daran vorgenommen.

Im Betrieb der Brennstoffzelle zeigen die Versuchsergebnisse, dass die Nachbehandlung der Gasdiffusionsschicht mit Säure nur für relativ kurze Zeit zu einem positivem Effekt führt. Langfristig wird damit jedoch die Alterung der Zelle beschleunigt. Die in der alkalischen Lösung behandelten Gasdiffusionsschichten zeigen demgegenüber ein deutlich verbessertes Langzeitverhalten. Zudem werden insgesamt höhere Stromdichten als ohne Nachbehandlung erzielt.

Die Effekte der erfindungsgemäßen Nachbehandlung konnten für Gasdiffusionsschichten basierend auf beispielsweise XC-72 Ketjen Black und Acethylen Black reproduzierbar nachgewiesen werden. Auch für weitere Kohlearten ist derselbe Effekt zu erwarten, da es sich bei der erfindungsgemäßen Nachbehandlung um eine Modifikation der Oberflächengruppen der Kohle handelt. Diese werden durch die jeweilige Nachbehandlung relativ einheitlich überführt und bewirken somit einen positiven Einfluss auf den Gas- bzw. Stofftransport. Neben reinen Gasdiffusionsschichten sind auch fertig mit Katalysator beschichtete Gasdiffusionselektroden, sogenannte GDE, für die erfindungsgemäße Nachbehandlung geeignet. Dies wird sich insofern als vorteilhaft erweisen, als dass der Katalysator oftmals einen Kohleträger aufweist, der durch diese Nachbehandlung ebenfalls positiv beeinflusst wird.

Als möglicherweise nachteilig wurde die erfindungsgemäße Nachbehandlung für das handelsübliche Ionomer Nafion diskutiert. Es wurde vermutet, dass Nafion durch eine alkalische Lösung in die weniger gut leitende Natriumform überführt wird und daher die Zellspannung und Leistung vermindert. Anders dagegen die Schwefelsäurenachbehandlung, welche zwar zu einer eher negativen Beeinflussung der Diffusionsschicht führt, jedoch das Nafion in die Säureform überführt und damit die Leitfähigkeit der Katalysatorschicht deutlich erhöht. Dies könnte dann in der Summe dazu führen, dass die beiden Effekte sich aufheben, bzw. nicht mehr ohne weiteres zu beobachten sind. Die experimentellen Untersuchungen zeigten demgegenüber jedoch auch für Nafion einen durchweg positiven Gesamteffekt durch eine alkalische Nachbehandlung.

Die erfindungsgemäße Nachbehandlung ist prinzipiell sowohl für Anoden als auch Kathoden für Brennstoffzellen geeignet, da sie ähnlich aufgebaut sind und in beiden Fällen der Stoff- und Gastransport eine wichtige Rolle spielt.

**Tabelle: 1**

| Stromdichten und Leistungswerte von Gasdiffusionsschichten und Gasdiffusionselektroden mit und ohne Nachbehandlung im Betrieb in einer Brennstoffzelle | | | |
|---|---|---|---|
| | Stromdichte [mA/cm²] bei 400 mV | Stromdichte [mA/cm²] bei 500 mV | Pmax |
| GDL (ohne) | 120 | 50 | 60 |
| GDL (Säure) | 110 | 45 | 55 |
| GDL (Lauge) | 175 | 80 | 85 |
| GDE (Säure) | gleiche Tendenz wie bei GDL | | |
| GDE (Lauge) | gleiche Tendenz wie bei GDL | | |

**Tabelle: 2**

| Stromdichten von Gasdiffusionselektroden mit und ohne Nachbehandlung im Betrieb in einer Mini-Brennstoffzelle bei einer Belegung von 1 g (Edelmetall) /cm² | | |
|---|---|---|
| Stromdichte [mA/cm²] bei 400 mV | und 50 °C | und 80°C |
| GDE (ohne) | 7,15 | 22,6 |
| GDE (Säure) | 5,65 | 26,75 |
| GDE (Lauge) | 13,55 | 36,15 |

## Patentansprüche

1. Verfahren zur Behandlung eines porösen, Kohle umfassenden Substrats,
**dadurch gekennzeichnet, dass**
das Substrat mit einer alkalischen Lösung behandelt wird.

2. Verfahren nach Anspruch 1, bei dem eine wässrige, alkalische Lösung als alkalische Lösung eingesetzt wird.

3. Verfahren nach einem der Ansprüche 1 bis 2, bei dem eine wässrige NaOH-Lösung, wässrige KOH-Lösung, wässrige Ca(OH)₂-Lösung oder wässrige NH₄OH-Lösung als alkalische Lösung eingesetzt wird.

4. Verfahren nach einem der Ansprüche 1 bis 3, bei dem eine alkalische Lösung in einer Konzentration von 0,001 bis 10 mol/l, insbesondere mit einer Konzentration von 0,1 bis 1 mol/l eingesetzt wird.

5. Verfahren nach einem der Ansprüche 1 bis 4, bei dem das Substrat in der alkalischen Lösung getaucht oder mit der alkalischen Lösung besprüht wird.

6. Verfahren nach einem der Ansprüche 1 bis 5, bei dem das Substrat für einen Zeitraum im Bereich von 5 Minuten bis 5 Stunden, insbesondere im Bereich von 30 bis 60 Minuten, mit der alkalischen Lösung behandelt wird.

7. Verfahren nach einem der Ansprüche 1 bis 6, bei dem die Behandlung mit einer temperierten alkalischen Lösung erfolgt, insbesondere mit einer alkalischen Lösung mit einer Temperatur zwischen 60 und 100 °C.

8. Verfahren nach einem der Ansprüche 1 bis 7, bei dem eine Gasdiffusionsschicht als Substrat eingesetzt wird.

9. Verfahren nach einem der Ansprüche 1 bis 7, bei dem eine Kohle geträgerte Katalysatorschicht als Substrat eingesetzt wird.

10. Verfahren nach einem der Ansprüche 1 bis 7, bei dem eine Gasdiffusionsschicht mit aufgebrachter Katalysatorschicht als Substrat eingesetzt wird.

11. Verfahren nach einem der Ansprüche 1 bis 10, bei dem das Substrat nach der Behandlung mit Wasser gewaschen wird.

12. Verfahren nach Anspruch 11, bei dem das Substrat nach der Behandlung für einen Zeitraum im Bereich von 10 Minuten bis 1 Stunde, insbesondere im Bereich von 20 bis 40 Minuten mit Wasser gewaschen wird.

13. Verfahren nach einem der Ansprüche 11 bis 12, bei dem das Substrat nach der Behandlung mit Wasser gewaschen wird, welches wenigstens eine Temperatur von 60 °C, insbesondere von 80 °C aufweist.
